# EUROPEAN PATENT APPLICATION

(11) **EP 1 462 464 A1**
(43) Date of publication of application: **29.09.2004**
(21) Application number: 03251855.7
(22) Date of filing: 25.03.2003
(51) Int. Cl.: C08F 210/02, C08F 4/642, C08F 2/00

(54) **Metallocene catalysts and preparation of polyolefins therewith**

(71) Applicant: Borealis Technology Oy, 06101 Porvoo (FI)
(72) Inventor: The designation of the inventor has not yet been filed
(74) Representative: Campbell, Neil Boyd

(57) **Abstract**

A process for the preparation of an olefin homopolymer or copolymer comprising polymerising at least one C₂₋₂₀-α-olefin in slurry phase in the presence of
1) a metallocene compound of formula I:

   (Cp)ₘRₙMX₂ (I)

   wherein:
   each Cp independently is an optionally substituted and/or optionally fused homo- or heterocyclopentadienyl ligand;
   R is a bridge of 1-7 bridging atoms;
   M is a transition metal of Group 3 to 10;
   each X is -CH₂-Y, wherein Y is C₆₋₂₀-aryl, C₆₋₂₀-heteroaryl, C₁₋₂₀-alkoxy, C₆₋₂₀-aryloxy, -NR'₂, -SR', -PR'₃, -SiR'₃, -OSiR'₃ or halogen;
   R' is C₁₋₂₀-hydrocarbyl or in case of -NR'₂, the two substituents R' can form a ring together with the nitrogen atom wherein they are attached to;
   and each non-cyclopentadienyl ring moiety can further be substituted;
   n is 0, 1 or 2;
   m is 1 or 2;
   wherein m+2 is equal to the valency of M; and
(II) a cocatalyst.

## Description

The present invention relates to a process for producing an olefin polymer using a particular metallocene catalyst as well as to certain metallocene compounds themselves. In particular, the invention relates to the use of a metallocene procatalyst having sigma ligands which do not have beta-hydrogen atoms and the use of this procatalyst in a multistage, preferably slurry phase followed by gas phase polymerisation, reaction for the manufacture of polyethylenes.

The use of metallocene catalysts in olefin polymerisation has been known for many years. Metallocene compounds/procatalysts are conventionally activated using a cocatalyst such as an aluminoxane, borate or other activating agent known from the literature to form the active metallocene catalyst species.

The most commonly used metallocene compounds comprise optionally bridged η-ligands (e.g. cyclopentadienyl ligands) coordinating to a group 4 to 6 metal having two sigma chloride ligands. Such metallocene dichlorides are conventionally directly activated with aluminoxanes to bring about a polymerisation active species which starts a polymerisation process with an alpha olefin. However, with certain metallocene compounds, in particular certain hafnium based metallocenes like n-BuCp₂HfCl₂ (where Cp denotes cyclopentadienyl) the use of this activation process has not afforded metallocene catalysts with high activity.

In addition, the life spans of certain metallocene dichlorides such as the hafnium complex mentioned above are short causing a drastic decrease in the productivity especially in a two stage process. Clearly, in a two stage process where the catalyst is being transferred from a first reactor to a second reactor it is critical that the life span of the catalyst is long enough for the active species to persist in the second reactor, e.g. in the latter stage of a loop/gas phase continuous polymerisation process. This is not achieved using various metallocene dichloride compounds.

In fact, in a loop/gas phase two stage process, in order to achieve a suitable productivity in the gas phase reactor when using certain metallocene dichloride compounds, the loop reactor is run in a non-optimal fashion and the residence time therein is shortened so that an active catalyst persists into the gas phase reactor. Moreover, a potentially expensive high diluent flush is used to transfer material quickly from the loop to gas phase causing a lot of catalyst which remains unreacted or only partially reacted with ethylene to be transferred into the gas phase reactor. This causes a decrease in particle homogeneity as well as further problems in the processing of target polymer products into films, injection moulds, etc. There remains a need therefore to find new metallocene catalysts which exhibit high activity and possess long life spans especially for use in multistage polymerisation processes.

It has been surprisingly found that by replacing the sigma chloride ligands on metallocene compounds by ligands in which no beta hydrogens are present, e.g. a benzyl ligand or -CH₂-SiMe₃, ligand activation of the metallocene species is considerably improved giving higher catalyst activity and resulting in improved processing behaviour and end product homogeneity. These metallocene catalysts also show longer life spans and are therefore of particular interest in multistage processes.

Some metallocene compounds comprising sigma ligands which do not comprise beta-hydrogen atoms are generically known in the prior art but have not been suggested for use in the process claimed below or not been explicitly identified as having the claimed advantageous properties. WO 99/29737 describes a process for the polymerisation of monomers utilizing a bulky ligand hafnium transition metal metallocene-type catalyst compound. Preferred sigma ligands on the metallocenes described therein are hydrides, hydrocarbyls, halogens, alkoxides, aryloxides, amides, phosphides but no specific mention is made of ligands which have no beta hydrogen atoms.

EP-A-481480 describes a process for producing propylene based oligomers using an unbridged biscyclopentadienyl hafnium or zirconium catalyst which may comprise a benzyl sigma ligand. Preferred compounds comprises a bispentamethylcyclopentadienyl structure but the document describes only propylene oligomerisation in a single reaction stage, preferably solution polymerisation.

WO 97/36937 describes the use of boratabenzene cocatalysts for use with a wide variety metallocenes including a number of dibenzyl species.

WO00/40620 concerns the preparation of bimodal film compositions prepared using a single site catalyst which may be a biscyclopentadienyl hafnium species. Whilst the possibility of the sigma ligands being other than chloride is generically mentioned, preferred single site catalysts are dihalide complexes.

EP-A-294942 describes a solid catalyst for the polymerisation of olefins comprising a metallocene and aluminoxane on a support. Many potential metallocene compounds are listed in the specification including a number of species comprising benzyl sigma ligands. However, whilst various metallocenes are known in the art it is clear that never before have the particular advantages of the process claimed been realised.

Thus, viewed from one aspect the invention provides a process for the preparation of an olefin homopolymer or copolymer comprising polymerising at least one C₂₋₂₀-α-olefin in slurry phase in the presence of
1) a metallocene compound of formula I:

   (Cp)ₘRₙMX₂ (I)

   wherein:
   each Cp independently is an optionally substituted and/or optionally fused homo- or heterocyclopentadienyl ligand, (e.g. a substituted or unsubstituted cyclopentadienyl, substituted or unsubstituted indenyl or substituted or unsubstituted fluorenyl ligand);
   R is a bridge of 1-7 bridging atoms;
   M is a transition metal of Group 3 to 10, preferably of Group 4 to 6, such as Group 4, e.g. Ti, Zr or Hf;
   each X is -CH₂-Y, wherein Y is C₆₋₂₀-aryl, C₆₋₂₀-heteroaryl, C₁₋₂₀-alkoxy, C₆₋₂₀-aryloxy, -NR'₂, -SR', -PR'₃, - SiR'₃, -OSiR'₃ or halogen;
   R' is C₁₋₂₀-hydrocarbyl, e.g. C₁₋₂₀-alkyl , C₂₋₂₀-alkenyl, C₂₋₂₀-alkynyl, C₃₋₁₂-cycloalkyl or C₆₋₂₀-aryl ; or in case of -NR'₂, the two substituents R' can form a ring, e.g. five- or six-membered ring, together with the nitrogen atom wherein they are attached to;
   and each non-cyclopentadienyl ring moiety (i.e. substituents on Cp, or ring moieties forming R' or X etc) can further be substituted e.g. with C₁₋₂₀-alkyl which may contain Si and/or O atoms;
   n is 0, 1 or 2;
   m is 1 or 2;
   wherein m+2 is equal to the valency of M; and
(II) a cocatalyst, e.g. a fluoroborate cocatalyst, preferably an aluminoxane cocatalyst.

Viewed from another aspect the invention provides polymers obtained by a process as hereinbefore described.

Said optional substituent(s) present on the Cp groups are independently selected from halogen, hydrocarbyl (e.g. C₁₋₂₀-alkyl , C₂₋₂₀-alkenyl , C₂₋₂₀-alkynyl, C₃₋₁₂-cycloalkyl, C₆₋₆₀-aryl or C₇₋₂₀-arylalkyl) , C₃₋₁₂-heterocycloalkyl, C₅₋₂₀-heteroaryl, C₁₋₂₀-haloalkyl, -SiR"₃, - OSiR"₃, -SR", -PR"₂ or -NR"₂, each R" is independently a hydrogen or hydrocarbyl, e.g. C₁₋₂₀-alkyl , C₂₋₂₀-alkenyl , C₂₋₂₀-alkynyl, C₃₋₁₂-cycloalkyl or C₆₋₂₀-aryl; or especially in case of -NR"₂, the two substituents R" can form a ring, e.g. five- or six-membered ring, together with the nitrogen atom wherein they are attached to.

The bridging group R between Cp groups, where present is preferably a bridge of 1-4 bridging C-atoms and 0-3 bridging heteroatoms, wherein the heteroatom(s) can be e.g. Si, Ge and/or O atom(s), whereby each of the bridge atoms may bear independently substituents, such as hydrogen, C₁₋₂₀-alkyl, tri (C₁₋₂₀-alkyl) silyl, tri (C₁₋₂₀-alkyl) siloxy, C₆₋₂₀-aryl or C₆₋₂₀-arylalkyl substituents; or a bridge of 1-3, e.g. one or two, bridging heteroatoms, such as silicon, germanium and/or oxygen atom(s), e.g. -SiR¹₂-, wherein each R¹ is independently C₁₋₂₀-alkyl, C₆₋₂₀-aryl or tri(C₁₋₂₀-alkyl)silyl- residue, such as trimethylsilyl-.

Cp preferably denotes cyclopentadienyl, indenyl, tetrahydroindenyl or fluorenyl optionally substituted as defined above. The Cp group may further bear a fused ring of 3 to 7 atoms, e.g. 4, 5 or 6 atoms, which ring may be aromatic, saturated or partially saturated such as a benzindenyl (such as 4,5-benzindenyl). In a highly preferred embodiment Cp denotes cyclopentadienyl or indenyl.

The subscript m is preferably 1 or 2, especially 2. When m is 2 it is preferred if the Cp groups are based on the same η⁵-ligand structure, e.g. both optionally substituted cyclopentadienyls or optionally substituted indenyls as defined above. In a highly preferred embodiment when m is 2 both Cp groups will be the same, i.e. carry the same substituents.

In a preferred embodiment of the invention each Cp group remains unsubstituted or independently bears 1, 2, 3, 4 or 5 substituents as defined above, more preferably 1, 2, 3 or 4, e.g. 1 or 2 substituents. Preferred substituents include C₁₋₂₀-alkyl, C₆₋₂₀-aryl, C₇₋₂₀-arylalkyl (wherein the aryl ring alone or as a part of a further moiety may further be substituted as indicated above, e.g. substituted by C₁₋₂₀-alkyl) , or -OSi (C₁₋₂₀-hydrocarbyl)₃.

Especially preferably the Cp groups carry 1 to 5 C₁₋₆-alkyl substituents such as methyl, ethyl, isopropyl or n-butyl or -OSi (C₁₋₂₀-alkyl) such as - OSidimethyltertbutyl.

The subscript n is preferably 1 or 0, i.e. the metallocene is either bridged or unbridged. When n represents 1, m should represent 2 and the bridge between the Cp groups should preferably be between the 1-positions on the Cp rings.

Further more preferred options for R, if present, are a methylene, ethylene or a silyl bridge, whereby the silyl can be substituted as defined above. Preferred silyl bridges are =SiR¹₂ where each R¹ is independently C₁₋₆ alkyl, (tri-C₁₋₆-alkylsiloxy) , (triC₁₋₆-alkylsilyl) or C₆₋₁₀ aryl, e.g. dimethylSi=, trimethylsilylmethyl)Si= or (methylphenyl)Si=. Most preferably R, if present, is a dimethylsilyl or ethylene bridge.

M is a transition metal of Group 3 to 10, e.g. 4 to 10, preferably of Group 4 to 6, e.g. Cr or Group 4. Most preferred metals are Ti, Zr or Hf. Especially preferably M is Hf.

Preferably, each Y is independently selected from C₆₋₂₀-aryl, NR'₂, -SiR'₃ or -OSiR'₃ wherein R' is as defined above. Most preferably -CH₂-Y is benzyl or -CH₂-SiR'₃. Preferred R' or R" groups are C₁₋₆-alkyl, e.g. methyl, ethyl, isopropyl, n-butyl, isobutyl, t-butyl or C₆₋₁₀-aryl.

In the metallocene compounds of the invention, if Cp is optionally substituted cyclopentadienyl, then R is preferably 0, and if Cp is optionally substituted indenyl, then R is preferably 1.

As specific examples e.g. bridged or, preferably, unbridged bis(mono-,di- or trialkyl substituted cyclopentadienyl) ligands complexed with Zr, Ti or Hf can be mentioned.

Hence more preferred metallocene compounds of use in the process of the invention are of formula (II) 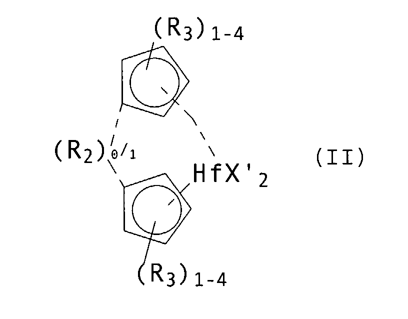 wherein R₂ represents an optionally present 1 to 4 atom bridge, e.g. ethylene or dimethyl silyl bridge, each R₃ is a C₁₋₆-alkyl or siloxy substituent (e.g. as described above), and both X' groups are either benzyl (Bz) or CH₂SiR'₃ wherein R' is as hereinbefore defined.

In a preferred embodiment of formula (II), R₂ is absent, R₃ is methyl, ethyl, n-propyl, i-propyl, n-butyl. i-butyl, t-butyl, preferably n-butyl or n-propyl and 1 or 2 substituents are present on each Cp ring, e.g. 1 substituent. X' is benzyl or CH₂SiR'₃ wherein R' is preferably C₁₋₆-alkyl, especially methyl.

A number of the metallocene compounds of the invention are new and therefore form a still yet further aspect of the invention. Thus, viewed from a yet further aspect the invention provides metallocene compounds of formula (III) or (IV)

Cp'₂ R_{0/1} HfBz₂ (III)

or

Cp'₂ R_{0/1} Hf(X¹) (CH₂SiR'₃) (IV)

wherein each Cp' denotes a mono or di C₁₋₆-alkyl-substituted cyclopentadienyl, R and R' are as herein before defined, e.g. a 1 to 4 atom bridge optionally comprising heteroatoms, X¹ is halogen, C₁₋₂₀-hydrocarbyl or -CH₂-Y wherein Y is as hereinbefore defined and Bz represents benzyl. R, if present is preferably ethylene or dimethylsilyl, although in a most preferred embodiment of both formulae (III) and (IV) R is absent. In formula (IV), X¹ is preferably -CH₂-Y, especially - CH₂SiR' ₃. Preferably R' is C₁₋₆-alkyl, especially methyl, e.g. X¹ is -CH₂SiMe₃.

Particularly preferred are the following compounds:
bis(n-butylcyclopentadienyl)Hf dibenzyl,
bis(methylcyclopentadienyl)Hf dibenzyl,
bis(1,2-dimethylcyclopentadienyl)Hf dibenzyl,
bis(n-butylindenyl) Hf dibenzyl,
bis(methylindenyl) Hf dibenzyl,
bis(dimethylindenyl) Hf dibenzyl,
bis(n-propylcyclopentadienyl)Hf dibenzyl,
bis(i-propylcyclopentadienyl)Hf dibenzyl,
bis (1,2,4-trimethylcyclopentadienyl) Zr dibenzyl,
dimethylsilylbis(2-methyl-4,5-benzindenyl) Zr dibenzyl,
rac-dimethylsilylbis(2-methyl-4-fluorenyl) Zr dibenzyl,
bis(n-butylcyclopentadienyl) Hf (CH₂SiMe₃)₂,
bis(n-propylcyclopentadienyl) Hf (CH₂SiMe₃)₂,
bis(i-propylcyclopentadienyl) Hf (CH₂SiMe₃) ₂,
bis (1,2,4-trimethylcyclopentadienyl) Zr (CH₂SiMe₃)₂,
dimethylsilylbis(2-methyl,4,5-benzindenyl) Zr (CH₂SiMe₃)₂,
rac-dimethylsilylbis(2-methyl-4-fluorenyl) Zr (CH₂SiMe₃)₂,
all of which form part of the invention.

In the definitions above, any alkyl, alkenyl or alkynyl residue (with up to 20 C-atoms) referred to above alone or as a part of a moiety may be linear or branched, and preferably contains up to 9, e.g. up to 6, carbon atoms. C₆₋₂₀-aryl is preferably phenyl or naphthyl, preferably phenyl. C₁₋₂₀-hydrocarbyl includes C₁₋₂₀-alkyl , C₆₋₂₀-aryl , C₂₋₂₀-alkenyl or C₂₋₂₀-alkynyl. Halogen means F, Cl, Br or I, preferably Cl. The term C₅-₂₀-heteroaryl may contain e.g. 1, 2 or 3, preferably 1 or 2 heteroatoms selected from N, O or S, preferably N (e.g. pyridyl). Bridged metallocenes may exist is rac or meso forms or mixtures thereof and can be separated using conventional techniques known in the art.

Viewed from another aspect the invention provides use of a metallocene of formula (III) or (IV) as an olefin polymerisation catalyst.

The preparation of the metallocenes of the invention can be carried out according or analogously to the methods known from the literature and is within skills of a person skilled in the field. Thus for the preparation see e.g. EP-A-129 368, examples of compounds wherein the metal atom bears a -NR"₂ ligand see inter alia WO-A-9856831 and WO-A-0034341. For the preparation see also e.g. in EP-A-260 130, WO-A-9728170, WO-A-9846616, WO-A-9849208, WO-A-9912981, WO-A-9919335, EP-A-836608WO-A-9856831, WO-A-00/34341, EP-A-423 101 and EP-A-537 130.

Metallocene procatalysts are generally used as part of a catalyst system which also includes an ionic cocatalyst or catalyst activator (herein generally cocatalyst), for example, an aluminoxane (e.g. methylaluminoxane (MAO), hexaisobutylaluminoxane and tetraisobutylaluminoxane) or a boron compound (e.g. a fluoroboron compound such as triphenylpentafluoroboron or triphentylcarbenium tetraphenylpentafluoroborate (C₆H₅) ₃B⁺B- (C₆F₅)₄))·

Alumoxanes are well known in the art and can be made by conventional methods. Traditionally, the most widely used aluminoxane is methylalumoxane (MAO), an alumoxane compound in which the R groups are methyls. For aluminoxanes with higher alkyl groups reference is made to hexaisobutylalumoxane (HIBAO).

As mentioned above, the olefin polymerisation catalyst system of the invention comprises (i) a procatalyst formed from a metallated compound of formula (I) and (ii) a cocatalyst. The cocatalyst compound is preferably an aluminoxane, most preferably an MAO, isobutylalumoxane, eg TIBAO (tetraisobutylalumoxane) or HIBAO (hexaisobutylalumoxane). The metallocene procatalyst and cocatalyst may be introduced into the polymerization reactor separately or together or, more preferably they are pre-reacted and their reaction product is introduced into the polymerization reactor.

If desired the procatalyst, procatalyst/cocatalyst mixture or a procatalyst/cocatalyst reaction product may be used in unsupported form or it may be solidified together with other catalyst forming components and used as such. Alternatively, the metallocene procatalyst or its reaction product with the cocatalyst can be introduced into the polymerization reactor in supported form, e.g. impregnated into a porous particulate support.

The particulate support material may be an organic or inorganic material, e.g. an organic polymer or pseudo metal oxide such as silica, alumina, titania or zirconia or a mixed oxide such as silica-alumina, silica-titania in particular silica, alumina or silica-alumina.

Preferably the support is a porous material so that the metallocene may be loaded into the pores of the support, e.g. using a process analogous to those described in WO94/14856 (Mobil), WO95/12622 (Borealis), WO96/32923 (Borealis) and WO96/00243 (Exxon). The particle size is not critical but is preferably in the range 5 to 200 µm, more preferably 20 to 80 µm.

If desired, further catalyst forming components, e.g. further activators, may be used e.g. in a manner known in the art.

Where an organoaluminium alkylating agent is used, this is preferably used in a quantity sufficient to provide a loading of at least 0.1 mmol Al/g carrier, especially at least 0.5 mmol Al/g, more especially at least 0.7 mmol Al/g, more preferably at least 1.4 mmol Al/g carrier, and still more preferably 2 to 3 mmol Al/g carrier. Where the surface area of the carrier is particularly high, higher aluminium loadings may be needed. Thus for example particularly preferred aluminium loadings with a surface area of 300-400 m²/g carrier may range from 0.5 to 3 mmol Al/g carrier while at surface areas of 700-800 m²/g carrier the particularly preferred range will be lower.

The active metal (ie. the metal of the procatalyst) is preferably loaded onto the support material at from 0.1 to 4%, preferably 0.1 to 1.0%, especially 0.1 to 0.5%, by weight metal relative to the dry weight of the support material.

The use and amounts of the metallocene compounds and the cocatalyst are within the skills of the artisan. The quantities employed may vary depending on the particular loading conditions and may be chosen in a manner well known to the skilled person.

Where a aluminoxane or boron activator is used, the mole ratio of the cocatalyst to the metallocene can be from 0.1:1 to 10000:1, especially 1:1 to 50:1, particularly 1:2 to 30:1. More particularly, where an alumoxane cocatalyst is used, then for an unsupported catalyst the aluminium:metallocene metal (M) molar ratio is conveniently 2:1 to 10000:1, preferably 50:1 to 1000:1. Where the catalyst is supported the Al:M molar ratio is conveniently 2:1 to 10000:1, preferably 50:1 to 400:1. Where a borane cocatalyst (catalyst activator) is used, the B:M molar ratio is conveniently 2:1 to 1:2, preferably 9:10 to 10:9, especially 1:1. When a neutral triarylboron type cocatalyst is used the B:M molar ratio is typically 1:2 to 500:1, however some aluminium alkyl would normally also be used. When using ionic tetraaryl borate compounds, it is preferred to use carbonium rather than ammonium counterions or to use B:M molar ratio below 1:1.

If desired the catalyst may be prepolymerised before the main polymerisation step.

The olefin polymerized in the method of the invention is preferably ethylene or an alpha-olefin or a mixture of ethylene and an alpha-olefin or a mixture of alpha olefins, for example C₂₋₂₀ olefins, e.g. ethylene, propene, but-1-ene, hex-1-ene, 4-methyl-pent-1-ene, oct-1-ene etc. The olefins polymerized in the method of the invention may include any compound which includes unsaturated polymerizable groups. Thus for example unsaturated compounds, such as C₆₋₂₀ olefins (including cyclic and polycyclic olefins (e.g. norbornene)), and polyenes, especially C₆₋₂₀ dienes, may be included in a comonomer mixture with lower olefins, e.g. C₂₋₅-olefins. Diolefins (ie. dienes) are suitably used for introducing long chain branching into the resultant polymer. Examples of such dienes include linear dienes such as 1,5-hexadiene, 1,6-heptadiene, 1,8-nonadiene, 1,9-decadiene, etc.

In the most preferred embodiment the polymer produced by the process of the invention is an ethylene homopolymer or an ethylene copolymer with a C₃₋₈-α-olefin, e.g. propylene, 1-butene or 1-hexene.

Comonomer can be added in one or more of the reactors used in the process of the invention and where two or more reactors are employed it is possible to use different comonomers in each reactor.

In general, where the polymer being produced is a homopolymer it will preferably be polyethylene or polypropylene. Where the polymer being produced is a copolymer it will likewise preferably be an ethylene or propylene copolymer with ethylene or propylene making up the major proportion (by number and more preferably by weight) of the monomer residues. Comonomers, such as C₄-₆ alkenes, will generally be incorporated to contribute to the mechanical strength of the polymer product.

Usually metallocene catalysts yield relatively narrow molecular weight distribution polymers; however, if desired, the nature of the monomer/monomer mixture and the polymerization conditions may be changed during the polymerization process so as to produce a broad bimodal or multimodal molecular weight distribution (MWD) in the final polymer product. In such a broad MWD product, the higher molecular weight component contributes to the strength of the end product while the lower molecular weight component contributes to the processability of the product, e.g. enabling the product to be used in extrusion and blow moulding processes, for example for the preparation of tubes, pipes, containers, etc.

The polymerisation process of the invention comprises at least one slurry phase polymerisation which may be carried out in a loop reactor or stirred tank reactor. The process of the invention may also comprise further polymerisation steps such as a prepolymerisation step, further slurry polymerisation steps or gas phase polymerisation steps.

Polymerization in the process of the invention may be effected in one or more, e.g. 1, 2 or 3, polymerization reactors, using conventional polymerization techniques, e.g. gas phase, solution phase, slurry or bulk polymerization.

In a most preferred embodiment the process of the invention comprises at least two reaction stages, a first slurry phase stage followed by a gas phase stage in series. Such a process is conveniently carried out in a loop reactor followed by a gas phase reactor. The process is preferably carried out continuously and a flash step used to transfer polymer and catalyst from the loop reactor to the gas phase reactor. Also within the scope of the invention is the possibility of using a further gas phase reactors, i.e. a process comprising slurry phase polymerisation followed by two gas phase polymerizations.

In a further preferred embodiment the split between the slurry phase and gas phase is such that the ratio by weight of the polymer is 60:40 to 40:60 slurry vs gas phase.

For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

The gas phase may also be run in gas phase condensed mode as is well known in the art.

Generally the quantity of catalyst used will depend upon the nature of the catalyst, the reactor types and conditions and the properties desired for the polymer product. Conventional catalyst quantities, such as described in the publications referred to herein, may be used. Hydrogen may be employed as is known in the art.

All publications referred to herein are hereby incorporated by reference. The invention will now be illustrated by reference to the following non-limiting examples.

### EXPERIMENTAL DATA

### Experimental part:

All starting materials are commercially available.

### Polymerisation procedure 1

Unimodal runs were made in 2 L reactor. Comonomer is added batch wise and no hydrogen is used.

**Table 1**

| Polymerisation procedure 1. | |
|---|---|
| Step | Operation |
| 1 | Add 600 mL of isobutane to the reactor |
| 2 | Add catalyst from the feed vessel by flushing it through with 600 mL isobutane, stirring 100 rpm |
| 3 | Heat to +80°C (30 min), stirring 200 rpm |
| 4 | Add co-monomer 30 ml batchwise using ethylene (continuous feed of ethylene) |
| 5 | Adjust targeted pressure in reactor with ethylene |
| 6 | Set stirring speed to 400 rpm |

### Polymerisation procedure 2

Bimodal polymerisations were performed in 5.2 L reactor. Comonomer and hydrogen are added continuously.

**Table 2**

| Polymerisation procedure 2 | |
|---|---|
| **Step** | **operation** |
| 1. | Add 1750 ml of isobutane to the reactor |
| 2. | Add catalyst from the feed vessel by flushing it through with 1750 ml isobutane |
| 3. | Heat to +85 °C, stirring 200 rpm |
| 4. | Set comonomer and hydrogen amounts and purge pre mixing chamber with the desired ethylene/comonomer/hydrogen composition |
| 5. | Set stirring speed to 400 rpm |
| 6. | Adjust targeted pressure in reactor with the ethylene |
| 7. | Continue slurry polymerisation until wanted amount of ethylene is consumed |
| 8. | Stop the polymerisation and flash isobutane into the flare, set new ethylene/comonomer/hydrogen composition and purge |
| 9. | Add nitrogen to replace isobutane, stirring 800 rpm, temperature 80°C |
| 10. | Start gas phase polymerisation and continue until wanted split is reached |

### Example 1; Preparation of Compound 1

### Benzylation of (n-BuCp)₂HfCl₂ by using benzyl potassium

### Synthesis of benzyl potassium

200 mmol (23.1g) t-BuOK⁽¹⁾ was dissolved in 250 ml toluene. 86 ml n-BuLi ⁽²⁾ (2.32 mol/L) was added during 1.5 hours. The mixture turned from white to red. The mixture was stirred for 2.5 days. Filtration and wash with toluene (5x100 ml) and pentane (50 ml) afforded 21.7 g benzylpotassium as brick red, toluene insoluble solid. Yield 83%.
(1) Potassium *tert*-butoxide, Fluka 60100, 97%, CAS 865-47-4, mp 256-258°C
(2) *n*-Butyllithium, ^{∼}2.5 M solution in hexanes, Aldrich 23,070-7, d 0.693, CAS 109-72-8

¹H-NMR in THF-d₈, δ(ppm): 6.01 (m, 2H), 5.10 (d, 2H), 4.68 (t, 1H), 2.22 (s, 2H). Chemical shifts are referenced to the solvent signal at 3.60 ppm. ¹³C -NMR in THF-d₈, δ(ppm): 152.3, 129.4, 110.1, 94.3, 51.6. Chemical shifts are referenced to the solvent signal at 66.50 (the middle peak).

### Synthesis of (n-BuCp) ₂Hf (CH₂Ph)₂

6.87 mmol (3.38g) (n-BuCp)₂HfCl₂ (Witco TA2823) and 150 ml of toluene were mixed at 20°C to give brown-grey solution. 13.74 mmol (1.79 g) benzylpotassium was added to the solution at 0°C as a solid during 10 minutes. The cooling bath was removed and the mixture was stirred at 20°C for 3 hours. Solvent was removed under reduced pressure and the remainder was extracted with 3 x 30 ml of pentane. The solvent was removed from the combined pentane solutions giving 3.86 g of (n-BuCp)₂Hf (CH₂Ph)₂ as yellow liquid. Yield 93%.

¹H-NMR in toluene-d₈, δ(ppm) : 7.44 (t, 4H), 7.11 (d, 4H), 7.08 (t, 2H), 5.75 (m, 4H), 5.67 (m, 4H), 2.33 (t, 4H), 1.77 (s, 4H), 1.54 (m, 4H), 1.43 (m, 4H), 1.07 (t, 6H) Chemical shifts are referenced to the solvent signal at 2.30 ppm (the middle peak). ¹³C -NMR in toluene-d₈, δ(ppm): 152.7, 137.5, 128, 126.8, 121.6, 112.7, 110.5, 65.3, 34.5, 29.7, 22.8, 14.1. Chemical shifts are referenced to the solvent signal at 20.46 (the middle peak). Elemental analysisl: C 63.57% (calc. 63.72), H 6.79% (calc. 6.68), Hf 29.78% (calc. 29.59), K <0.1% (calc. 0).

### Example 2: Preparation of Compound 2

### Synthesis of (n-BuCp) ₂Hf (CH₂SiMe₃)₂

6.87 mmol (3.38g) (n-BuCp) ₂HfCl₂ (Witco TA2823) and 150 ml of toluene were mixed at 20°C. 13.75 mmol (22.5 ml, 0.61 M) trimethylsilylmethyllithium in pentane (Fluka 92972) was added to the greenish grey solution over one minute at 0°C. The cooling bath was removed and the reaction mixture was stirred at 20°C for five hours. The solvent was removed under reduced pressure and the remainder was extracted with pentane to afford 4.07 g of (n-BuCp)₂Hf(CH₂SiMe₃)₂ in pure state as a beige coloured, pentane soluble solid. Yield 99%.

Found C, 52.13; H, 7.99; Hf, 30.22; Si, 9.24 Calculated for C₂₆H₄₈HfSi₂ C, 52.46; H, 8.13; Hf 29.98; Si, 9.44. ¹H-NMR (CDCl₃) δ 5.97 (m, 4H, Cp-H), 5.67 (m, 4H, Cp-H), 2.51 (m, 4H, CH₂CH₂CH₂CH₃) 1.59 (m, 4H, CH₂CH₂CH₂CH₃) , 1.39 (m, 4H, CH₂CH₂CH₂CH₃), 0.93 (t, 6H, -CH₂CH₂CH₂CH₃), -0.03 (s, 18H, SiMe), -0.50 (s, 4H, Hf-CH₂-). Chemical shifts are referenced to the solvent signal at 7.25 ppm. ¹³C-NMR (CDCI₃) δ 126.11 (C_{q}), 111.18 (aromatic C-H), 105.68 (aromatic C-H), 44.60 (Hf-CH₂-) , 34.18 (-CH₂CH₂CH₂CH₃), 30.01 (-CH₂CH₂CH₂CH₃), 22.45 (-CH₂CH₂CH₂CH₃), 13.89 (-CH₂CH₂CH₂CH₃) , 3.69 (SiMe). Chemical shifts are referenced to the solvent signal at 77.00 ppm.

### Example 3; Preparation of Catalyst 1

Complex solution of 467 g n-Bu-Cp₂HfCl₂ and 37.8 kg of 30wt% MAO in toluene was prepared. Pre-contact time 70 minutes. Prepared complex solution was added slowly onto 30 kg of on activated silica SP9-391 (Grace silica carrier) Contact time 3 h at 24 °C. Drying with nitrogen purge 3 h at 50 °C. Ready made catalyst has Al/Hf =200 mol/mol; Hf 0,40wt%

### Example 4; Preparation of Catalyst 2

Complex solution of 6 ml toluene, 152.6 mg n-Bu-Cp₂HfCl₂ and 13.75 ml of 30wt% MAO in toluene was prepared. Pre-contact time 70 minutes. Prepared complex solution was added slowly onto of on 10,0551g activated silica SP9-393A (Grace silica carrier) Contact time 3 h at 24°C. Drying with nitrogen purge 3 h at 50°C. Ready made catalyst has Al/Hf =200 mol/mol ; Hf 0,40wt%.

### Example 5; Preparation of Catalyst 3

Complex solution of 0.13 ml toluene, 66 mg n-Bu-Cp₂HfBz₂ and 4.83 ml of 30wt% MAO in toluene was prepared. Pre-contact time 70 minutes. Prepared complex solution was added slowly onto of on 1.9989 g activated silica SP9-391 (Grace silica carrier) Contact time 3 h at 24°C. Drying with nitrogen purge 3 h at 50°C. Ready made catalyst has Al/Hf =200 mol/mol ; Hf 0,40wt%.

### Example 6; Preparation of Catalyst 4

Complex solution of 0.11 ml toluene, 60,3 mg n-Bu-Cp₂HfBz₂ and 4,43 ml of 30wt% MAO in toluene was prepared. Pre-contact time 70 minutes. Prepared complex solution was added slowly onto of on 1.9989 g activated silica SP9-393A (Grace silica carrier). Ready made catalyst has Al/Hf =200 mol/mol; Hf 0,40wt%

### Example 7; Preparation of catalyst 5

Complex solution of 0.08 mL toluene, 45.9 mg (nBuCp) ₂Hf (CH₂SiMe₃) and 3.42 ml of 30 wt% MAO in toluene was prepared. Precontact time 60 minutes. Prepared solution was added slowly onto 1.043 g activated silica SP9-393 (Grace silica carrier). Contact time 3 h at 24°C. Drying with nitrogen purge 2 h at 50°C. Ready made catalyst has Al/Hf = 200 mol/mol; Hf 0.40 wt%.

### Example 8 (Comparative)

Polymerisation was performed according to polymerisation procedure presented in table 1 by using 183.5 mg of catalyst prepared according to example 3. The yield on polymer was 248 g.

### Example 9 (Comparative)

Polymerisation was performed according to polymerisation procedure presented in table 1 by using 146.8 mg of prepared according to example 4. The yield on polymer was 197 g.

### Example 10 (Comparative)

Polymerisation was performed according to polymerisation procedure presented in table 2 by performing steps 1-7 and by using 236 mg of catalyst prepared according to example 3. The yield on polymer was 801 g.

### Example 11 (Comparative)

Polymerisation was performed according to polymerisation procedure presented in table 2 by performing all steps and by using 560 mg of catalyst prepared according to example 3. The yield on polymer was 881 g.

### Example 12

Polymerisation was performed according to polymerisation procedure presented in table 1 by using 197.3 mg of catalyst prepared according to example 5. The yield on polymer was 364 g.

### Example 13

Polymerisation was performed according to polymerisation procedure presented in table 1, by using 174.6 mg of catalyst prepared according to example 7. The yield of the polymer was 281 g.

### Example 14

Polymerisation was performed according to polymerisation procedure presented in table 2 by performing steps 1-7 and by using 210 mg of of catalyst prepared according to example 5. The yield on polymer was 888 g.

### Example 15

Polymerisation was performed according to polymerisation procedure presented in table 2 by performing steps 1-7 and by using 220 mg of catalyst prepared according to example 6. The yield on polymer was 868 g.

### Example 16

Polymerisation was performed according to polymerisation procedure presented in table 2 by performing all steps and by using 352 mg of catalyst prepared according to example 6. The yield on polymer was 930 g.

### Example 17

Polymerisation was performed according to polymerisation procedure presented in table 2 by performing all steps and by using 504 mg of catalyst prepared according to example 7. The yield on polymer was 1019 g.

### Summary of the examples

**Table 3**

| Polymerisation activity by Unimodal Polymerisation (polymerisation procedure 1) | | |
|---|---|---|
| **Run** | **Purpose** | **Kg PE/g cat h**^{**-1**} |
| Example 8 (comp) | (nBuCp)₂HfCl₂ with SP9-391 carrier | 1.31 |
| Example 9 (comp) | (nBuCp)₂HfCl₂ with SP9-393A carrier | 1.34 |
| Example 12 | (nBuCp)₂Hf(CH₂Ph)₂ with SP9-391 | 1.84 |
| Example 17 | (nBuCp)₂Hf(CH₂SiMe₃)₂ with SP9-393A | 1.61 |

Unimodal tests, 2 L reactor , temperature +80°C, 1-hexene 30 mL, run time 60 min, Ethylene partial pressure 5 bar *p* (C₂=), p (total) =17 bar, no H₂,

**Table 4**

| Polymerisation activity by bimodal Polymerisation (polymerisation procedure 2) | | | | | |
|---|---|---|---|---|---|
| **Run** | **Purpose** | **Mode** | **Productivity kg/g** | **Loop t min** | **GP t min** |
| Ex 10 comp | (nBuCp)₂ HfCl₂ * | Slurry | 3.4 | 26 | |
| Ex 14 | (nBuCp)₂ Hf(CH₂Ph)₂ * | | 4.2 | 161 | |
| Ex 16 | (nBuCp)₂ Hf(CH₂Ph)₂ ** | | 3.9 | 183 | |
| Ex 11 comp | (nBuCp)₂ HfCl₂ * | Bi-modal | 1.6 | 26 | 162 |
| Ex 16 comp | (nBuCp)₂ Hf(CH₂Ph)₂ ** | split 40/60 | 2.6 | 35 | 180 |
| Ex 17 | (nBuCp)₂Hf( CH₂SiMe3) ** | 40/60 | 2.0 | 22 | 150 |

| | | | | | |
|---|---|---|---|---|---|
| *with SP9-391 carrier | | | | | |
| **with SP9-393 carrier | | | | | |

5.2-1 PMC reactor, slurry temp. 85/ gas phase temp. 80°C, p (tot) =21, p(C₂)=7, H₂/C₂=3.2/0 mol/kmol, C₆/C₂=56/59 mol/kmol

It is clear from the results presented above that the (nBuCp)₂Hf(CH₂Ph)₂ catalyst system gives rise to improved activity and productivity as compared to the dichloride analogue.

## Claims

1. A process for the preparation of an olefin homopolymer or copolymer comprising polymerising at least one C₂₋₂₀-α-olefin in slurry phase in the presence of
1) a metallocene compound of formula I:
(Cp)ₘRₙMX₂ (I)
wherein:
each Cp independently is an optionally substituted and/or optionally fused homo- or heterocyclopentadienyl ligand;
R is a bridge of 1-7 bridging atoms;
M is a transition metal of Group 3 to 10;
each X is -CH₂-Y, wherein Y is C₆₋₂₀ -aryl, C₆₋₂₀-heteroaryl, C₁₋₂₀-alkoxy, C₆₋₂₀-aryloxy, -NR'₂, -SR', -PR'₃, - SiR' ₃, -OSiR'₃ or halogen;
R' is C₁₋₂₀-hydrocarbyl or in case of -NR' ₂, the two substituents R' can form a ring together with the nitrogen atom wherein they are attached to;
and each non-cyclopentadienyl ring moiety can further be substituted;
n is 0, 1 or 2;
m is 1 or 2;
wherein m+2 is equal to the valency of M; and
(II) a cocatalyst.

2. A process as claimed in claim 1 wherein each Cp is optionally substituted by halogen, C₁₋₂₀-alkyl, C₂₋₂₀-alkenyl, C₂₋₂₀-alkynyl, C₃₋₁₂-cycloalkyl , C₆₋₂₀-aryl or C₇₋₂₀-arylalkyl, C₃₋₁₂-heterocycloalkyl which contains 1, 2, 3 or 4 heteroatom(s) in the ring moiety, C₅₋₂₀-heteroaryl, C₁₋₂₀-haloalkyl, -SiR"₃, -OSiR"₃, -SR", -PR"₂ or -NR"₂ (wherein R" is R' or H).

3. A process as claimed in claim 1 or 2 wherein Cp denotes optionally substituted cyclopentadienyl or indenyl.

4. A process as claimed in claim 3 wherein both Cp groups are identical cyclopentadienyls carrying 1 to 5 C₁₋₆-alkyl substituents.

5. A process as claimed in any one of claims 1 to 4 wherein n is 0.

6. A process as claimed in any one of claims 1 to 5 wherein M is Hf.

7. A process as claimed in any one of claims 1 to 6 wherein -CH₂-Y is benzyl or -CH₂-SiMe₃.

8. A process as claimed in any one of claims 1 to 7 wherein said metallocene is of formula (II) 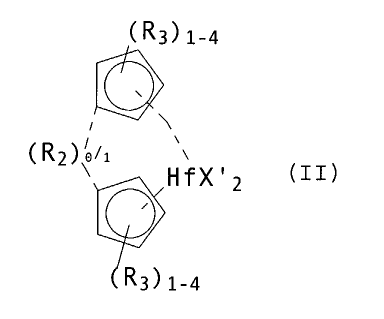 wherein R₂ represents an optionally present 1 to 4 atom bridge, each R₃ is a C₁₋₆-alkyl or siloxy substituent, and both X' groups are either benzyl (Bz) or CH₂SiR'₃ wherein R' is as hereinbefore defined.

9. A process as claimed in any one of claims 1 to 8 wherein said slurry phase is carried out in a loop reactor.

10. A process as claimed in claim 9 wherein subsequent to said slurry phase polymerisation there is a gas phase polymerisation.

11. A process as claimed in any one of claims 1 to 10 wherein said olefin homopolymer or copolymer is an ethylene homopolymer or ethylene copolymer with a C₃₋₆-comonomer.

12. Metallocene compounds of formula (III) or (IV)
Cp'₂R_{0/1}HfBz₂ (III)
or
Cp'₂R_{0/1}Hf(X¹) (CH₂SiR'₃) (IV)
wherein each Cp' denotes a mono or di C₁₋₆-alkyl-substituted cyclopentadienyl, R, and R' are as herein before defined, X¹ is halogen, C₁₋₂₀-hydrocarbyl or -CH₂-Y wherein Y is as hereinbefore defined and Bz represents benzyl.

13. A process as claimed in claim 12 wherein in formula (IV), X¹ is -CH₂SiMe₃.

14. The metallocene compounds:
bis(n-butylcyclopentadienyl)Hf dibenzyl,
bis(methylcyclopentadienyl)Hf dibenzyl,
bis(1,2-dimethylcyclopentadienyl)Hf dibenzyl,
bis(n-butylindenyl) Hf dibenzyl,
bis(methylindenyl) Hf dibenzyl,
bis(dimethylindenyl) Hf dibenzyl,
bis(n-propylcyclopentadienyl)Hf dibenzyl,
bis(i-propylcyclopentadienyl)Hf dibenzyl,
bis (1,2,4-trimethylcyclopentadienyl) Zr dibenzyl,
dimethylsilylbis(2-methyl-4,5-benzindenyl) Zr dibenzyl,
rac-dimethylsilylbis(2-methyl-4-fluorenyl) Zr dibenzyl,
bis (n-butylcyclopentadienyl) Hf (CH₂SiMe₃)₂,
bis (n-propylcyclopentadienyl) Hf (CH₂SiMe₃)₂,
bis(i-propylcyclopentadienyl) Hf (CH₂SiMe₃)₂,
bis (1,2,4-trimethylcyclopentadienyl) Zr (CH₂SiMe₃)_{2,}
dimethylsilylbis(2-methyl,4,5-benzindenyl) Zr (CH₂SiMe₃)₂,
rac-dimethylsilylbis(2-methyl,4-fluorenyl) Zr (CH₂SiMe₃)₂.
